# EUROPÄISCHE PATENTSCHRIFT

(11) **EP 0 741 137 B1**
(45) Veröffentlichungstag und Bekanntmachung des Hinweises auf die Patenterteilung: **24.01.2001**
(21) Anmeldenummer: 96103018.6
(22) Anmeldetag: 29.02.1996
(51) Int. Cl.: C07F 7/20, C07F 7/18

(54) **Verfahren zur Herstellung von chlorfunktionellen Organosilanen armen bzw. freien aminofunktionellen Organosilanen**
Process for the preparation of aminofunctional organosilanes with low chlorofunctional organosilane contamination
Procédé de préparation d'organosilanes aminofonctionnelles exempts d'organosilanes chlorofonctionnelles

(30) Priorität: 04.05.1995 DE 19516386
(43) Veröffentlichungstag der Anmeldung: 06.11.1996
(73) Patentinhaber: Degussa-Hüls Aktiengesellschaft, 60287 Frankfurt am Main (DE)
(72) Erfinder: Rauleder, Hartwig, Dr., 79618 Rheinfelden (DE); Seiler, Claus-Dietrich Dr., 79618 Rheinfelden (DE); Kötzsch, Hans-Joachim, Dr., 79618 Rheinfelden (DE); Srebny, Hans-Günther, Dr., 48249 Dülmen (DE)

(56) Entgegenhaltungen:
- EP-A- 0 464 819
- EP-A- 0 595 488
- EP-A- 0 702 017
- DE-A- 2 521 399
- DE-A- 4 130 643
- DE-B- 2 749 316
- US-A- 5 210 254

## Beschreibung

Die Erfindung betrifft ein Verfahren zur Herstellung von aminofunktionellen Organosilanen, die arm an chlorfunktionellen Organosilanen bzw. im wesentlichen frei von chlorfunktionellen Organosilanen sind, durch Umsetzung von chlorfunktionellen Organosilanen mit organischen Aminen oder Ammoniak und Abtrennen der dabei gebildeten organischen Ammoniumchloride und/oder des Ammoniumchlorides.

Aminofunktionelle Organosilane finden u. a. in der Gießereitechnik als Verarbeitungshilfsstoff Anwendung. Sie werden beispielsweise auch als Haftvermittler für anorganische Füllstoffe in lagerungsstabilen Harzen oder für Glasfaserschlichten eingesetzt.

Es ist bekannt, daß die Herstellung aminofunktioneller Organosilane im allgemeinen durch Umsetzen eines chlorfunktionellen Organosilans mit Ammoniak oder einem Alkylamin bei erhöhten Temperaturen unter Druck erfolgt, wobei das stöchiometrische Verhältnis von Ammoniak zum chlorfunktionellen Organosilan so gewählt wird, daß die primäre Aminverbindung bevorzugt gebildet wird. Dies tritt beispielsweise bei Verwendung eines mehr als 50fachen Ammoniaküberschusses, bezogen auf die eingesetzte Menge an chlorfunktionellem Organosilan, ein. Die aminofunktionellen Organosilane werden nachfolgend auch als Aminosilane bezeichnet. Die großtechnische Durchführung dieses Aminierungs-Verfahrens erfolgt in Stahlautoklaven, die aufgrund des verfahrensbedingt hohen Druckes apparativ aufwendig zu konstruieren sind und auch einen deutlichen Kostenfaktor darstellen. Die in solchen Autoklaven erzielbaren Raum-Zeit-Ausbeuten sind deshalb bezüglich der Menge der Einsatzprodukte, deren Mengenverhältnis zueinander, des Reaktionsdruckes, der Reaktionstemperatur und der Reaktionszeit vorausschauend einzustufen. Die Reaktionszeit ist dabei so zu bemessen, daß die Umsetzung des chlorfunktionellen Organosilans praktisch vollständig verläuft und eine möglichst hohe Produktqualität erzielt wird. Untersuchungen zeigen, daß unter den üblichen Verfahrensbedingungen bezüglich Reaktionsdruck, der Menge der Einsatzstoffe und der Reaktionstemperatur der Umsetzungsgrad bezüglich des chlorfunktionellen Organosilans bereits nach ca. 5 Stunden bei rund 99,6 % liegt, jedoch für die Vervollständigung der Umsetzung nochmals der gleiche Zeitaufwand erforderlich ist, wie für die Erreichung des Umsetzungsgrades von 99,6 %.

Bei der destillativen Aufarbeitung des Aminosilan-Rohproduktes, das trotz hohem Zeitaufwand bei der Aminierungs-Reaktion noch merkliche Reste an chlorfunktionellem Organosilan enthält, zeigt sich, daß mit einem wirtschaftlich vertretbaren Aufwand eine destillative Abtrennung des unumgesetzten chlorfunktionellen Organosilan-Anteils vom Zielprodukt nicht möglich ist und diese als Verunreinigung im Destillat, d. h. im Produkt, wiederzufinden sind.

Bei den vorliegenden aminofunktionellen Organosilanen spielt der Gehalt an Verbindungen, die nicht hydrolysierbares Chlor enthalten, bezüglich der Verwendbarkeit, z. B. als Haftvermittler in Glasfaserschlichten u. a. m., eine bedeutende Rolle. Der Gehalt an Verbindungen, die nicht hydrolysierbares Chlor enthalten, sind in den hier behandelten Aminosilan-Produkten nur im Bereich weniger Gew.-ppm tolerierbar. Unter Verbindungen, die nicht hydrolysierbares Chlor enthalten, sind hier chlorfunktionelle Organosilane, d. h. Chlororganosilane, zu verstehen. Im Gegensatz hierzu werden unter hydrolysierbaren Chloriden Verbindungen, wie Organochlorsilane, z. B. Alkylchlorsilane oder die Hydrochloride von Aminoalkylalkoxysilanen, also Aminhydrochloride bzw. Alkylammoniumchloride bzw. organische Ammoniumchloride bzw. organische Hydrochloride, verstanden.

Es hat sich gezeigt, daß Aminosilan-Destillate, die unmittelbar nach Beendigung der Destillation frei an hydrolysierbarem Chlorid sind, jedoch Reste an unumgesetztem chlorfunktionellen Organosilan enthalten, im Verlauf der Zeit einen stetig ansteigenden Gehalt an hydrolysierbarem Chlorid entwickeln, was durch eine allmähliche Quartärnierung der Aminosilane durch Restgehalte an chlorfunktionellem Organosilan verursacht wird und je nach deren Anteil im Aminosilan in mehr oder weniger kurzen Zeiträumen zur Unverwendbarkeit des Produktes führt.

In der vorgängigen, noch nicht veröffentlichen deutschen Patentanmeldung mit der Nr. 195 13 976.3 ist die Herstellung von chloridarmen bzw. chloridfreien aminofunktionellen Organosilanen beschrieben. Hiernach können nicht erwünschte Chloridanteile, die durch organische Hydrochloride, wie Aminoalkylhydrochloride, oder Ammoniumchlorid, d. h. hydrolysierbare Chloride, bedingt sind, durch Umsetzung mit Metallalkoxiden und Abtrennen der dabei entstehenden Metallchloride aus dem Aminosilan nahezu vollständig entfernt werden. Hier sind jedoch die besonderen Aspekte des Produktionsmaßstabes und der im Rohprodukt der Aminosilan-Synthese enthaltenen, unumgesetzten chlorfunktionellen Organosilane nicht berücksichtigt.

DE-OS 25 21 399 offenbart ein Verfahren zur Herstellung von Aminoalkylalkoxysilanen durch Umsetzung der entsprechenden Halogenalkylsilane mit überschüssigem Ammoniak bei Temperaturen über 80 °C, wobei man das bei der Aminierung erhaltene Reaktionsgemisch abkühlen läßt, gegebenenfalls ein Lösemittel zugibt, anschließend filtriert, eine der im Produktgemisch enthaltenen Cl⁻-Menge äquivalente Menge Alkoholat, beispielsweise Natriummethanolat, zusetzt, nochmals filtriert und das Filtrat destillativ aufarbeitet. Jedoch bleiben auch hierbei Restmengen an chlorfunktionellem Organosilan im Produkt unberücksichtigt.

Der Erfindung lag daher die Aufgabe zugrunde, ein Verfahren bereitzustellen, das eine großtechnische Herstellung von an chlorfunktionellen Organosilanen armen bzw. freien aminofunktionellen Organosilanen ermöglicht.

Die gestellte Aufgabe wird erfindungsgemäß entsprechend den Angaben der Patentansprüche gelöst.

Als aminofunktionelle Organosilane, die arm an chlorfunktionellen Organosilanen bzw. im wesentlichen frei von chlorfunktionellen Organosilanen sind, sollen im Sinne der vorliegenden Erfindung solche Produkte bezeichnet werden, deren Gehalt an organisch gebundenem Chlor, d. h. Chlor aus nicht hydrolysierbaren Chlorverbindungen, kleiner gleich 30 Gew.-ppm beträgt.

Es wurde ein Verfahren zur Herstellung von aminofunktionellen Organosilanen, die arm an chlorfunktionellen Organosilanen bzw. im wesentlichen frei von chlorfunktionellen Organosilanen sind, für den großtechnischen Maßstab gefunden, das dadurch gekennzeichnet ist, daß man die mit Ammoniak oder Alkylaminen nicht zur Reaktion gekommenen Mengen an chlorfunktionellem Organosilan durch Zugabe von Metallalkoxiden in einer der Aminosilan-Synthese nachgeschalteten Reaktion umsetzt.

Gegenstand der vorliegenden Erfindung ist somit ein Verfahren zur Herstellung von aminofunktionellen Organosilanen, die arm an chlorfunktionellen Organosilanen bzw. im wesentlichen frei von chlorfunktionellen Organosilanen sind, durch Umsetzung von chlorfunktionellen Organosilanen mit organischen Aminen oder Ammoniak und Abtrennen der dabei gebildeten organischen Ammoniumchloride und/oder des Ammoniumchlorides, das dadurch gekennzeichnet ist, daß man die mit Ammoniak oder Alkylaminen nicht zur Reaktion gekommenen geringen Mengen chlorfunktioneller Organosilane durch Zugabe von mindestens einem Metallalkoxid im Rahmen einer der Aminosilansynthese nachgeschalteten destillativen Aufarbeitung umsetzt, wobei ein Produkt erhalten wird, das ≤ 30 Gew.-ppm Chlor aus organisch gebundendem Chlor enthält.

Beim erfindungsgemäßen Verfahren können im allgemeinen aminofunktionelle Organosilane der Formel 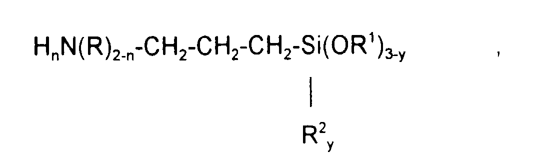 wobei
R für einen Alkylrest mit 1 bis 3 C-Atomen steht und
n gleich 0 oder 1 oder 2 sein kann,
R¹ für einen Alkylrest mit 1 bis 4 C-Atomen und
R² für einen Methyl- oder Phenylrest stehen und y gleich 0 oder 1 oder 2 ist,
hergestellt werden.

In der Regel setzt man beim erfindungsgemäßen Verfahren Chlororganosilan-Verbindungen der Formel 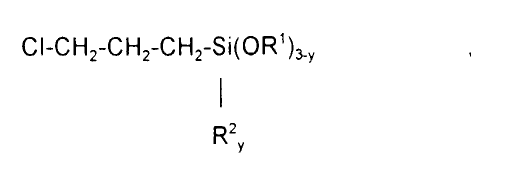 wobei
R¹ für einen Alkylrest mit 1 bis 4 C-Atomen und
R² für einen Methyl- oder Phenylrest stehen und y gleich 0 oder 1 oder 2 ist,
mit Aminen der Formel

HₘN(R))₃₋ₘ ,

wobei R für einen Alkylrest mit 1 bis 3 C-Atomen steht und
m gleich 1 oder 2 oder 3 sein kann,
um.

Nach dem Abtrennen des gebildeten Ammonium-/Alkylammoniumchlorids, beispielsweise in der Art, wie in der noch nicht veröffentlichten deutschen Patentanmeldung Nr. 195 13 976.3 beschrieben, können die im Rohaminosilan noch vorliegenden geringen Mengen an unumgesetzten chlorfunktionellen Organosilanen mit mindestens einem Metallalkoxid behandelt und das Produktgemisch aufgearbeitet werden. Geeigneterweise erfolgt die Aufarbeitung des Produktgemisches durch eine Destillation.

Nach dem erfindungsgemäßen Verfahren werden bevorzugt solche aminofunktionellen Organosilane hergestellt, die nachfolgend dargestellt sind:

NH₂-CH₂-CH₂-CH₂-Si(OR')₃ ,

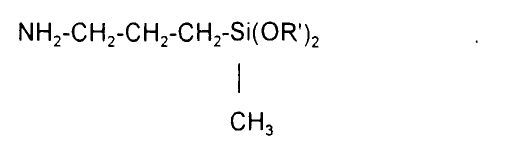

HN(CH₃)-CH₂-CH₂-CH₂-Si(OR')₃ ,

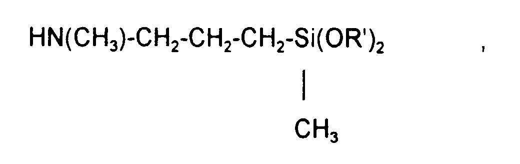

wobei R' für eine CH₃- oder C₂H₅-Gruppe steht.

Vorzugsweise werden beim erfindungsgemäßen Verfahren Metallalkoxide aus der Reihe der Alkali- und/oder Erdalkali-Alkoxide, geeigneterweise mindestens ein Alkoxid, eingesetzt. Aber auch Alkoxide anderer Metalle können gegebenenfalls eingesetzt werden. Das besonders bevorzugte Alkoxid ist das des Natriums.

Insbesondere werden die Metallalkoxide in gelöster Form eingesetzt, wobei das Metallalkoxid vorzugsweise in Alkoholen gelöst zugesetzt wird. Geeigneterweise kann auch die alkoholische Komponente im Alkoxid mit den am Siliziumatom des aminofunktionellen Organosilans befindlichen Alkoxy-Gruppen identisch sein. Ebenso kann als Lösealkohol für das Metallalk-oxid derjenige Alkohol verwendet werden, von dem sich die Alkoxygruppe im Metallalkoxid ableitet.

Beim erfindungsgemäßen Verfahren setzt man die Alkoxide vorzugweise in Mengen zu, die bis zum 10fachen der Mol-Menge an chlorfunktionellem Organosilan betragen. Es können auch größere Überschüsse an Metallalkoxid verwendet werden.

Die Umsetzung zur Herabsetzung bzw. Beseitigung des im nicht umgesetzten chlorfunktionellen Organosilan vorliegenden Chlors führt man zweckmäßigerweise so durch, daß man von der stöchiometrisch zur vollständigen Beseitigung des im chlorfunktionellen Organosilan vorliegenden Chlors ein in Abhängigkeit von der umzusetzenden chlorfunktionellen Organosilan-Verbindung Vielfaches der stöchiometrischen Menge zusetzt und zur Reaktion bringt. Ganz besonders bewährt hat sich in der Praxis der Zusatz einer Metallalkoxidmenge, die dem 3- bis 5fachen der stöchiometrisch erforderlichen Metallalkoxidmenge entspricht.

In bevorzugter Weise werden die Metallalkoxide dem zur destillativen Aufarbeitung gelangenden Rohaminosilan zugesetzt und die Umsetzung im Rahmen der destillativen Aufarbeitung ablaufen gelassen. Je nach Art der angewandten Destillationsweise - diskontinuierlich oder kontinuierlich - und in Abhängigkeit vom Betriebsdruck in den Anlagen durchläuft das Metallalkoxid-/chlorfunktionelles-aminofunktionelles Organosilan-System im allgemeinen den Temperaturbereich von 20 °C bis zu 200 °C. In der betrieblichen Praxis wird das zu destillierende System bevorzugt im Temperaturbereich von 80 °C bis 160 °C gehalten, besonders bevorzugt wird der Temperaturbereich von 100 °C bis 130 °C.

Für die Umsetzung des chlorhaltigen Substrates mit mindestens einem Metallalkoxid hat es sich als durchaus vorteilhaft erwiesen, dies unter starkem Rühren vorzunehmen, was in kurzer Zeit zur vollständigen Umsetzung der Reaktanden führt. Die Durchführung der Umsetzung kann bei vermindertem Druck, Normaldruck oder auch bei erhöhtem Druck erfolgen.

Durch das erfindungsgemäße Verfahren können nunmehr aminofunktionelle Organosilane, die arm an chlorfunktionellen Organosilanen bzw. im wesentlichen frei von chlorfunktionellen Organosilanen sind, großtechnisch hergestellt werden.

Beim erfindungsgemäßen Verfahren wird darüber hinaus ein besonders wirtschaftlicher Vorteil erzielt. - Die eigentliche, für einen maximalen Umsatz notwendige Aminierungszeit bei der Aminosilan-Synthese kann durch die erfindungsgemäßen Maßnahmen deutlich herabgesetzt werden, d. h., daß ein möglichst niedriger Restgehalt an nicht umgesetztem chlorfunktionellem Organosilan im Rohaminosilan anstelle der langen Reaktionszeit auch durch die erfindungsgemäßen Maßnahmen erzielbar ist. Das erfindungsgemäße Verfahren kann so zu einer deutlichen Kapazitätssteigerung auch einer bereits bestehenden Produktionsanlage beitragen.

Die Erfindung wird durch die nachfolgenden Beispiele näher erläutert:

### Beispiele

### Vergleichsbeispiel A

1 000 g 3-Aminopropyltriethoxysilan, das bereits einen Gehalt an hydrolysierbarem Chlorid kleiner 2 Gew.-ppm und einen Gehalt an Gesamtchlor kleiner 30 ppm Gew.-ppm ausweist, werden mit 2 g 3-Chlorpropyltriethoxysilan versetzt. Die Bestimmung des Gesamtchlorgehaltes in der Mischung ergibt einen Wert von 320 Gew.-ppm.

Nach einer Standzeit von 3 Monaten wird der Gehalt an hydrolysierbarem Chlorid in der Mischung bestimmt. Es wird ein Wert von 187 Gew.-ppm ermittelt.

### Vergleichsbeispiel B

Im Autoklaven erfolgt die Umsetzung von 4830 g (20 mol) 3-Chlorpropyltriethoxysilan mit 17 kg (1000 mol) Ammoniak bei 70 °C über einen Zeitraum von 13 Stunden. Nach Abtrennung des als Nebenprodukt sich bildenden Ammoniumchlorides in beispielsweise der Art, wie in der noch nicht veröffentlichten deutschen Patentanmeldung Nr. 195 13 976.3 beschrieben, wird das erhaltene Rohaminosilan destillativ aufgearbeitet.

Im Destillat wird ein Gehalt an Gesamtchlor kleiner 30 Gew.-ppm ermittelt, der Gehalt an hydrolysierbarem Chlorid liegt unter 2 Gew.-ppm.

Nach einer Standzeit von 3 Monaten wird der Gehalt an hydrolysierbarem Chlorid erneut ermittelt. Es wird ein Wert von 3 Gew.-ppm gefunden.

### Vergleichsbeispiel C

Im Autoklaven wird die Umsetzung aus Vergleichsbeispiel B wiederholt. Jedoch wird die Umsetzungszeit von 13 Stunden auf 8 Stunden reduziert. Das Autoklavenprodukt wird wie beschrieben aufgearbeitet und im Destillat der Gehalt an Gesamtchlor zu 310 Gew.-ppm bestimmt, der Gehalt an hydrolysierbarem Chlorid wird zu 3 Gew.-ppm ermittelt.

Nach einer Standzeit des Destillates von 3 Monaten wird der Gehalt an hydrolysierbarem Chlorid erneut bestimmt. Es wird ein Wert von 152 Gew.-ppm ermittelt.

### Vergleichsbeispiel D

Im Autoklaven wird die Umsetzung aus Vergleichsbeispiel B wiederholt. Jedoch wird die Umsetzungszeit von 13 Stunden auf 5 Stunden reduziert.

Das Autoklavenprodukt wird wie beschrieben aufgearbeitet und im Destillat der Gehalt an Gesamtchlor zu 620 Gew.-ppm bestimmt, der Gehalt an hydrolysierbarem Chlorid liegt bei kleiner 2 Gew.-ppm. Nach einer Standzeit des Destillates von 3 Monaten wird der Gehalt an hydrolysierbarem Chlorid erneut bestimmt. Es wird ein Wert von 210 Gew.-ppm ermittelt.

### Beispiel 1

Im Autoklaven wird die Umsetzung aus Vergleichsbeispiel D wiederholt. Das Autoklavenprodukt wird zur Entfernung des Ammoniumchlorides in der Art, wie in der noch nicht veröffentlichten deutschen Patentanmeldung Nr. 195 13 976.3 beschrieben, behandelt. In dem zur Destillation gelangenden Produkt wird der Gehalt an Gesamtchlor und hydrolysierbarem Chlorid bestimmt. Der Gehalt an Gesamtchlor wird zu 590 Gew.-ppm, der an hydrolysierbarem Chlorid zu kleiner 1 Gew.-ppm, ermittelt.

Dem zur Destillation eingesetzten aliquoten Anteil wird eine solche Menge an 20%iger ethanolischer Natriumethylat-Lösung zugesetzt, die dem 5fachen der Gesamtchlormenge von 590 Gew.-ppm entspricht.

Die Destillation findet unter intensivem Rühren statt. Im erhaltenen Destillat wird der Gehalt an Gesamtchlor und hydrolysierbarem Chlorid bestimmt. Der Gesamtchlorgehalt wird zu kleiner 30 Gew.-ppm bestimmt, der Gehalt an hydrolysierbarem Chlorid zu kleiner 1 Gew.-ppm.

Nach einer Standzeit des Destillates von 3 Monaten wird der Gehalt an hydrolysierbarem Chlorid erneut bestimmt. Der Wert von kleiner 1 Gew.-ppm, der im Frischdestillat ermittelt wurde, wird bestätigt.

## Patentansprüche

1. Verfahren zur Herstellung von aminofunktionellen Organosilanen, die arm an chlorfunktionellen Organosilanen bzw. im wesentlichen frei von chlorfunktionellen Organosilanen sind, durch Umsetzung von chlorfunktionellen Organosilanen mit organischen Aminen oder Ammoniak und Abtrennen der dabei gebildeten organischen Ammoniumchloride und/oder des Ammoniumchlorides,
dadurch gekennzeichnet,
daß man die mit Ammoniak oder Alkylaminen nicht zur Reaktion gekommenen geringen Mengen chlorfunktioneller Organosilane durch Zugabe von mindestens einem Metallalkoxid im Rahmen einer der Aminosilansynthese nachgeschalteten destillativen Aufarbeitung umsetzt, wobei ein Produkt erhalten wird, das ≤ 30 Gew.-ppm Chlor aus organisch gebundendem Chlor enthält.

2. Verfahren nach Anspruch 1,
dadurch gekennzeichnet,
daß mindestens ein Metallalkoxid den noch chlorfunktionelle Organosilane enthaltenden Aminosilan-Syntheseprodukten in der Menge zugesetzt wird, die bis zum 10fachen der Rest-Mol-Menge an chlorfunktionellem Organosilan beträgt.

3. Verfahren nach Anspruch 2,
dadurch gekennzeichnet,
daß mindestens ein Metallalkoxid in der Menge zugesetzt wird, die stöchiometrisch der bis zur 5fachen Menge an chlorfunktionellem Organosilan, bezogen auf dessen Rest-Mol-Menge im Aminosilan-Synthese-Produkt, entspricht.

4. Verfahren nach den Ansprüchen 1 bis 3,
dadurch gekennzeichnet,
daß die Umsetzung der Restmenge an chlorfunktionellen Organosilanen mit mindestens einem Metallalkoxid bei Temperaturen von 20 °C bis 200 °C durchgeführt wird.

5. Verfahren nach den Ansprüchen 1 bis 4,
dadurch gekennzeichnet,
daß die Umsetzung der Restmenge an chlorfunktionellen Organosilanen mit mindestens einem Metallalkoxid unter vermindertem Druck, Normaldruck oder erhöhtem Druck durchgeführt wird.

6. Verfahren nach den Ansprüchen 1 bis 5,
dadurch gekennzeichnet,
daß die Umsetzung der Restmenge an chlorfunktionellen Organosilanen mit mindestens einem Metallalkoxid unter Rühren durchgeführt wird.

7. Verfahren nach den Ansprüchen 1 bis 6,
dadurch gekennzeichnet,
daß als Metallalkoxid mindestens ein Alkoxid der Alkalielemente und/oder der Erdalkalielemente eingesetzt wird.

8. Verfahren nach den Ansprüchen 1 bis 7,
dadurch gekennzeichnet,
daß das Metallalkoxid in gelöster Form eingesetzt wird.

9. Verfahren nach den Ansprüchen 1 bis 8,
dadurch gekennzeichnet,
daß mindestens ein in einem Alkohol oder Alkoholgemisch gelöstes Metallalkoxid zugesetzt wird.

10. Verfahren nach Anspruch 9,
dadurch gekennzeichnet,
daß als Lösemittel für das Metallalkoxid der zum jeweiligen Alkoxid korrespondierende Alkohol eingesetzt wird.

## Revendications

1. Procédé de préparation d'organosilanes fonctionnalisés par une amine, qui sont pauvres en organosilanes fonctionnalisés par un chlore, ou essentiellement dépourvus d'organosilanes fonctionnalisés par un chlore, par réaction d'organosilanes fonctionnalisés par un chlore avec une amine organique ou de l'ammoniac, et séparation des chlorures d'ammonium organiques et/ou du chlorure d'ammonium ainsi formés,
caractérisé en ce qu'
on fait réagir les faibles quantités d'organosilanes fonctionnalisés par un chlore qui ne sont pas entrées en réaction avec l'ammoniac ou avec les alkylamines, par addition d'au moins un alkoxyde métallique dans le cadre d'un traitement par distillation postconnecté, de la synthèse des aminosilanes, dans lequel on obtient un produit qui contient ≤ 30 ppm en poids de chlore provenant de chlore lié organiquement.

2. Procédé selon la revendication 1,
caractérisé en ce qu'
au moins un alkoxyde métallique est ajouté aux produits de synthèse d'aminosilane contenant encore des organosilanes fonctionnalisés par un chlore, en quantités qui s'élèvent à jusqu'à 10 fois la quantité en molécules résiduelles, d'organosilane fonctionnalisé par un chlore.

3. Procédé selon la revendication 2,
caractérisé en ce qu'
au moins un alkoxyde métallique est ajouté en quantités qui correspondent stoechiométriquement à la quantité jusqu'au quintuple en organosilane fonctionnalisé par un chlore, rapporté à sa quantité molaire résiduelle dans le produit de synthèse de l'aminosilane.

4. Procédé selon les revendications 1 à 3,
caractérisé en ce que
la réaction de la quantité résiduelle en organosilanes fonctionnalisés par un chlore, est effectuée avec au moins un alkoxyde métallique à des températures allant de 20°C à 200°C.

5. Procédé selon les revendications 1 à 4,
caractérisé en ce que
la réaction des quantités résiduelles en organosilanes fonctionnalisés par un chlore, est effectuée avec au moins un alkoxyde métallique sous pression réduite, sous pression normale ou sous pression augmentée.

6. Procédé selon les revendications 1 à 5,
caractérisé en ce que
la réaction de la quantité résiduelle en organosilanes fonctionnalisés par un chlore avec au moins un alkoxyde métallique, est effectuée sous agitation.

7. Procédé selon les revendications 1 à 6,
caractérisé en ce que
comme alkoxyde métallique, on met en oeuvre au moins un alkoxyde des éléments de métal alcalin, et/ou des éléments de métal alcalino-terreux.

8. Procédé selon les revendications 1 à 7,
caractérisé en ce que
l'alkoxyde métallique est utilisé sous forme dissoute.

9. Procédé selon les revendications 1 à 8,
caractérisé en ce qu'
on ajoute au moins un alkoxyde métallique dissous dans un alcool ou dans un mélange d'alcools.

10. Procédé selon la revendication 9,
caractérisé en ce que
comme solvant pour l'alkoxyde métallique, on met en oeuvre un alcool qui correspond à l'alkoxyde respectif.

## Claims

1. A process for preparing amino-functional organosilanes which are low in chloro-functional organosilanes or are essentially free of chloro-functional organosilanes, by reacting chloro-functional organosilanes with organic amines or ammonia and separating off the organic ammonium chlorides and/or the ammonium chloride thus formed, characterized in that the small amounts of chloro-functional organosilanes which have not reacted with ammonia or alkylamines are reacted by addition of at least one metal alkoxide in the course of a work-up by distillation downstream of the aminosilane synthesis, giving a product which comprises < 30 ppm by weight of chlorine from organically-bound chlorine.

2. A process according to claim 1, characterized in that at least one metal alkoxide is added to the aminosilane synthesis products still containing chloro-functional organosilanes in an amount which is up to 10 times the residual molar amount of chloro-functional organosilane.

3. A process according to claim 2, characterized in that at least one metal alkoxide is added in an amount which corresponds stoichiometrically to up to 5 times the amount of chloro-functional organosilane, based on the residual molar amount of the latter in the aminosilane synthesis product.

4. A process according to any of claims 1 to 3, characterized in that the reaction of the residual amount of chloro-functional organosilanes with at least one metal alkoxide is carried out at temperatures of from 20°C to 200°C.

5. A process according to any of claims 1 to 4, characterized in that the reaction of the residual amount of chloro-functional organosilanes with at least one metal alkoxide is carried out under reduced pressure, atmospheric pressure or elevated pressure.

6. A process according to any of claims 1 to 5, characterized in that the reaction of the residual amount of chloro-functional organosilanes with at least one metal alkoxide is carried out with stirring.

7. A process according to any of claims 1 to 6, characterized in that at least one alkoxide of the alkali metals and/or the alkaline earth metals is used as metal alkoxide.

8. A process according to any of claims 1 to 7, characterized in that the metal alkoxide is used in dissolved form.

9. A process according to any of claims 1 to 8, characterized in that at least one metal alkoxide dissolved in an alcohol or an alcohol mixture is added.

10. A process according to claim 9, characterized in that the alcohol corresponding to the respective alkoxide is used as solvent for the metal alkoxide.
